# EUROPÄISCHE PATENTANMELDUNG

(11) **EP 2 945 155 A1**
(43) Veröffentlichungstag der Anmeldung: **18.11.2015**
(21) Anmeldenummer: 15165595.8
(22) Anmeldetag: 29.04.2015
(51) Int. Cl.: G10L 15/06, G10L 15/22, G10L 15/30, G10L 15/07

(54) **VORRICHTUNG UND VERFAHREN ZUR SPRACHERKENNUNG, INSBESONDERE IN EINEM FAHRZEUG**

(30) Priorität: 16.05.2014 DE 102014209358
(71) Anmelder: Ford Global Technologies, LLC, Dearborn, MI 48126 (US)
(72) Erfinder: Arndt, Christoph, 57583 Mörlen (DE); Gussen, Uwe, 52393 Hürtgenwald (DE); Stefan, Frederic, 52072 Aachen (DE)
(74) Vertreter: Dörfler, Thomas

(57) **Zusammenfassung**

Die Erfindung betrifft Vorrichtung und ein Verfahren zur Spracherkennung, insbesondere in einem Fahrzeug, mit einer Verarbeitungseinheit zur Verarbeitung von Audiosignalen eines Benutzers auf Basis eines diesem Benutzer zugeordneten Benutzersprachprofils, wobei die Vorrichtung dazu konfiguriert ist, folgende Schritte durchzuführen: Speichern des Benutzersprachprofils in einem nur diesem Benutzer zugeordneten, außerhalb der Verarbeitungseinheit befindlichen externen Speicher, und automatisches Abrufen des in diesem externen Speicher gespeicherten Benutzersprachprofils bei jedem Neustart der Vorrichtung, wobei das automatisch abgerufene Benutzersprachprofil an die Verarbeitungseinheit zur Verwendung bei der Verarbeitung künftiger Audiosignale des Benutzers übermittelt wird.

## Beschreibung

Die Erfindung betrifft eine Vorrichtung und Verfahren zur Spracherkennung, insbesondere in einem Fahrzeug.

Spracherkennungssysteme verwenden i.d.R. ein gegebenes, spezifisches Benutzersprachprofil, um Audiosignale eines bestimmten Benutzers verarbeiten zu können. Dabei werden die Phoneme, wie sie von dem betreffenden Benutzer gesprochen werden, identifiziert, so dass die Erkennung der Phoneme in Anpassung an den Benutzer bzw. dessen Sprechweise oder Sprachmuster erfolgen kann. Phoneme stellen die kleinsten bedeutungsunterscheidenden Lauteinheiten einer Sprache dar, wobei z.B. in der deutschen Sprache ca. 40 unterschiedliche Phoneme verwendet werden.

Die Identifizierung der Phoneme erfolgt typischerweise unter Verwendung diverser Filter, über welche die jeweiligen Eingangssignale mit unterschiedlichen Frequenz- und Zeitgrenzen verarbeitet werden. Die Resultate werden als Parameter in dem Spracherkennungssystem verwendet, wobei z.B. ein Hidden-Markov-Modells (HMM) oder künstliche neuronale Netz verwendet werden. Im Ergebnis kann eine spezifische Reaktion auf den betreffenden Nutzer und eine Anpassung an dessen jeweiligen Aussprache sowie etwaige Sprachbesonderheiten wie z.B. einen Dialekt oder Akzent, die Aussprache eines Muttersprachlers etc. erfolgen.

Bei der Nutzung von Spracherkennungssystemen tritt das Problem auf, dass bei Beginn der Verwendung eines neuen Systems i.d.R. eine gewisse Zeit für die Anpassung an den Benutzer benötigt wird, was sich insbesondere z.B. bei der Spracherkennung in einem Fahrzeug dann als umständlich oder lästig erweist, wenn diese Anpassung bei jedem Neustart eines Fahrzeuges von Neuem erfolgen muss. Zudem ist die erforderliche Lernphase insofern für den Benutzer beschwerlich, als dieser gegebenenfalls Befehle wiederholt erteilen muss oder sich falschen oder nicht erwünschten Systemreaktionen ausgesetzt sieht, wobei mitunter auch die wiederholte Erteilung einer Reihe von Befehlen erforderlich werden kann.

Aus EP 1 678 008 B1 ist u.a. ein System zur Auswahl eines Benutzersprachprofils für eine Fahrzeugvorrichtung unter Verwendung mehrerer externer Vorrichtungen bekannt, wobei ein Spracherkennungssystem mit einem Speicher, in welchem mehrere Benutzersprachprofile gespeichert sind, gekoppelt ist. Ein das Spracherkennungssystem enthaltendes Steuermodul verwendet eine von externen Vorrichtungen empfangene Kennung, um ein bestimmtes Benutzersprachprofil aus der Mehrzahl von Benutzersprachprofilen auszuwählen. Das ausgewählte Benutzersprachprofil wird von dem Spracherkennungssystem verwendet, um Audiosignale von dem Benutzer zu verarbeiten.

Zum weiteren Stand der Technik wird lediglich beispielhaft auf US 8,447,598 B2 und DE 10 2006 056 286 A1 verwiesen.

Es ist eine Aufgabe der vorliegenden Erfindung, eine Vorrichtung und ein Verfahren zur Spracherkennung, insbesondere in einem Fahrzeug, bereitzustellen, welche eine zuverlässige Spracherkennung unter Vermeidung der Notwendigkeit wiederholter Lernphasen ermöglichen.

Diese Aufgabe wird durch die Vorrichtung gemäß den Merkmalen des unabhängigen Patentanspruchs 1 bzw. das Verfahren gemäß den Merkmalen des nebengeordneten Patentanspruchs 10 gelöst.

Eine erfindungsgemäße Vorrichtung zur Spracherkennung, insbesondere in einem Fahrzeug, mit einer Verarbeitungseinheit zur Verarbeitung von Audiosignalen eines Benutzers auf Basis eines diesem Benutzer zugeordneten Benutzersprachprofils, ist dazu konfiguriert, folgende Schritte durchzuführen:
- Speichern des Benutzersprachprofils in einem nur diesem Benutzer zugeordneten, außerhalb der Verarbeitungseinheit befindlichen externen Speicher; und
- Automatisches Abrufen des in diesem externen Speicher gespeicherten Benutzersprachprofils bei jedem Neustart der Vorrichtung, wobei das automatisch abgerufene Benutzersprachprofil an die Verarbeitungseinheit zur Verwendung bei der Verarbeitung künftiger Audiosignale des Benutzers übermittelt wird.

Der vorliegenden Erfindung liegt insbesondere das Konzept zugrunde, ein Benutzersprachprofil, welches zuvor erlernte und die Aussprache bzw. das Sprachmuster eines bestimmten Benutzers betreffende Parameter umfasst, in einem nur diesem Benutzer zugeordneten, außerhalb der Verarbeitungseinheit befindlichen externen Speicher (welcher gewissermaßen ein "personalisiertes System" bzw. einen "personalisierten Speicher" darstellt) zu speichern. Dieses personalisierte System kann die betreffenden Parameter dann an die Verarbeitungseinheit der Vorrichtung zur Spracherkennung bei jedem Neustart (also z.B. insbesondere nach Motorstart eines Kraftfahrzeuges) übertragen, so dass die Notwendigkeit eines wiederholten "Trainings" der Vorrichtung zur Spracherkennung entfällt.

Das in dem externen Speicher gespeicherte Benutzersprachprofil kann ferner in vorteilhafter Weise fortwährend angepasst (adaptiert) werden, wenn sich z.B. signifikante bzw. zu starke Unterschiede zwischen den im gespeicherten Benutzersprachprofil enthaltenen Sprachmustern und dem jeweilig aktuell festgestellten Sprechverhalten des Benutzers ergeben, wobei solche Veränderungen z.B. auf Stress, Müdigkeit oder Krankheit des Benutzers zurückzuführen sein können. Solche Anpassungen können erfindungsgemäß besonders rasch erfolgen, das nach erstmaliger Speicherung des Benutzersprachprofils bereits ein Basissatz von zuvor erlernten Phonemen verfügbar ist und lediglich bei jedem erneuten Systemstart aus dem externen Speicher bzw. dem personalisierten System abgerufen werden muss. Etwaige Änderungen bzw. Anpassungen können in einem "Unterraum" bzw. einer Teilmenge des eigentlichen "Phonem-Raumes" vorgenommen werden, wobei dieser Unterraum wesentlich kleiner als der dieser insgesamt verfügbare "Phonem-Raum" ist, so dass die Anpassung wesentlich rascher und für den Benutzer nahezu unmerklich erfolgen kann.

Da es sich bei dem externen Speicher bzw. personalisierten System, in welchem die erlernten Sprachparameter bzw. Phoneme (d.h. das jeweilige Benutzersprachprofil) abgespeichert werden und aus dem sie bei jedem Neustart abgerufen werden, insbesondere um ein tragbares Gerät handeln kann, wird durch die Erfindung die Möglichkeit geschaffen, beliebige Spracherkennungssysteme sowie z.B. hiermit ausgestattete Fahrzeuge unter Nutzung der jeweiligen Parameter an den betreffenden Benutzer zu adaptieren. Es liegt somit insbesondere keine Beschränkung etwa auf ein bestimmtes Fahrzeug vor, sondern die jeweilige Anpassung sowie die entsprechende Spracherkennung können auch jederzeit in einem beliebigen anderen Fahrzeug auf robuste, zuverlässige sowie für den jeweiligen Benutzer komfortable Weise erfolgen. Dies ermöglicht insbesondere eine Anwendung in Mietfahrzeugen, Firmenfahrzeugen, beim sogenannten "Carsharing" usw. Das jeweilige Spracherkennungssystem wird hierbei in die Lage versetzt, die jeweiligen Befehle des Fahrers bzw. Benutzers ohne vorherige Trainingsphase direkt und komfortabel zu befolgen.

Ein weiterer Vorteil der Erfindung besteht darin, dass die Realisierung ohne zusätzlichen Hardwareaufwand und damit verbundene Kosten erfolgen kann, da bereits verfügbare Datentransfermodule genutzt werden können und die Verarbeitung der jeweiligen Phoneme bereits Bestandteil des jeweiligen vorhandenen Spracherkennungssystems ist.

Gemäß einer Ausführungsform ist der dem Benutzer zugeordnete Speicher in einer mobilen und tragbaren Speichervorrichtung, insbesondere einem Fahrzeugschlüssel, Schlüsselanhänger, Speicherarmband oder dergleichen angeordnet. In einer weiteren Ausführungsform kann der dem Benutzer zugeordnete Speicher auch ein Speicherbereich in einem Cloud-Speicher sein.

Gemäß einer Ausführungsform ist die Vorrichtung ferner dazu konfiguriert, das Speichern bzw. Abrufen des Benutzersprachprofils über eine drahtlose Datenübertragung vorzunehmen, was weiter insbesondere auch jeweils unter Nutzung eines Verschlüsselungs- und/oder Passwortschutzes erfolgen kann. Der Datentransfer kann hierbei auf eine begrenzte Zahl von Phonemen beschränkt werden, um eine Überschreitung der Kapazität der jeweiligen Kommunikation bzw. Datenübertragungskanäle zu vermeiden.

Gemäß einer Ausführungsform ist die Vorrichtung ferner dazu konfiguriert, eine automatische Anpassung des Benutzersprachprofils an ein aktuelles Sprachmuster des Benutzers vorzunehmen.

Gemäß einer Ausführungsform ist die Vorrichtung ferner dazu konfiguriert, das an die Verarbeitungseinheit zur Verwendung bei der Verarbeitung künftiger Audiosignale des Benutzers übermittelte Benutzersprachprofil in Abhängigkeit von einem erfassten aktuellen Zustand des Benutzers anzupassen.

Gemäß einer Ausführungsform ist die Vorrichtung ferner dazu konfiguriert, das an die Verarbeitungseinheit zur Verwendung bei der Verarbeitung künftiger Audiosignale des Benutzers übermittelte Benutzersprachprofil anzupassen, wenn bei der Verarbeitung von Audiosignalen des Benutzers eine verminderte Separierbarkeit aufeinanderfolgender Phoneme und/oder eine Abnahme der Erkennungsrate von Phonemen festgestellt wird.

Gemäß einer Ausführungsform ist die Vorrichtung ferner dazu konfiguriert, auf Basis einer Abweichung zwischen dem im externen Speicher gespeicherten Benutzersprachprofil und einem aktuellen Sprachmuster des Benutzers die Erzeugung eines Warnsignals zu veranlassen.

Die Erfindung betrifft weiter auch ein Verfahren zur Spracherkennung, insbesondere in einem Fahrzeug, mit einer Verarbeitungseinheit zur Verarbeitung von Audiosignalen eines Benutzers auf Basis eines diesem Benutzer zugeordneten Benutzersprachprofils, wobei das Verfahren folgende Schritte aufweist:
- Speichern des Benutzersprachprofils in einem nur diesem Benutzer zugeordneten, außerhalb der Verarbeitungseinheit befindlichen externen Speicher; und
- Automatisches Abrufen des in diesem externen Speicher gespeicherten Benutzersprachprofils bei jedem Neustart der Vorrichtung, wobei das automatisch abgerufene Benutzersprachprofil an die Verarbeitungseinheit zur Verwendung bei der Verarbeitung künftiger Audiosignale des Benutzers übermittelt wird.

Weitere Ausgestaltungen der Erfindung sind der Beschreibung sowie den Unteransprüchen zu entnehmen.

Die Erfindung wird nachstehend anhand eines in der beigefügten Abbildung dargestellten Ausführungsbeispiels näher erläutert.

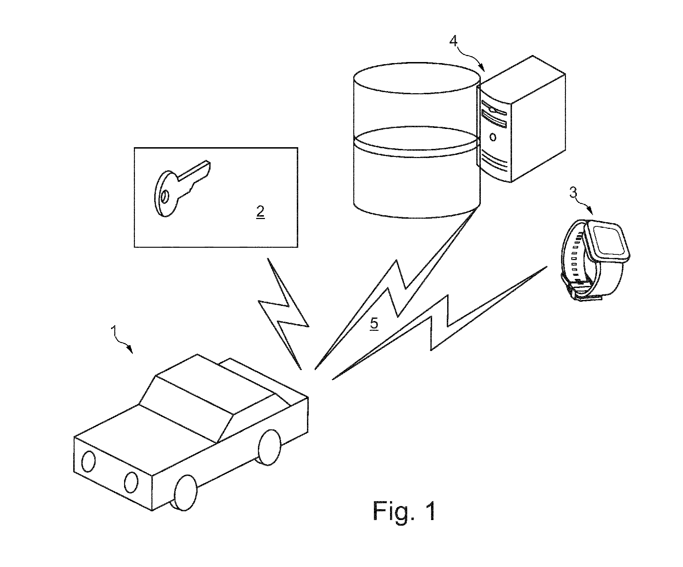

Die einzige Figur 1 zeigt eine schematische Darstellung zur Erläuterung des Grundprinzips und wesentlicher Komponenten gemäß der vorliegenden Erfindung.

Die erfindungsgemäße Vorrichtung zur Spracherkennung weist zunächst eine Verarbeitungseinheit zur Verarbeitung von Audiosignalen eines Benutzers auf Basis eines diesem Benutzer zugeordneten Benutzersprachprofils auf. Diese Verarbeitungseinheit kann gemäß Fig. 1 z.B. in einem Fahrzeug 1 vorgesehen sein. Die Verarbeitungseinheit ist zunächst in für sich bekannter Weise dazu in der Lage, Audiosignale von einem Benutzer bzw. Fahrer auf Basis eines Benutzersprachprofils zu verarbeiten, wobei ebenfalls in bekannter Weise Phoneme des Benutzers identifiziert werden und eine Anpassung der Spracherkennung an den betreffenden Benutzer erfolgt.

Erfindungsgemäß werden diese Phoneme in einem nur diesem Benutzer zugeordneten, außerhalb der Verarbeitungseinheit befindlichen externen Speicher (also gewissermaßen einem "personalisierten System" bzw. "personalisierten Speicher") gespeichert, wobei es sich bei dieser personalisierten Vorrichtung beispielsweise, wie in Fig. 1 angedeutet, um einen mit einer Speicherfunktion ausgestatteten Schlüssel bzw. Schlüsselanhänger 2 oder eine am Handgelenk vom Benutzer mitgeführte Speichervorrichtung wie etwa ein Speicherarmband 3 handeln kann. In einer weiteren Ausführungsform kann die Speicherung der betreffenden Phoneme auch in einem Speicherbereich eines Cloud-Speichers 4 erfolgen.

Die in der betreffenden personalisierten Vorrichtung bzw. dem personalisierten externen Speicher abgespeicherten Phoneme werden sodann bei jedem Neustart der Vorrichtung zur Spracherkennung bzw. des Fahrzeugs 1 aus dem betreffenden Speicher abgerufen und in die Verarbeitungseinheit übertragen, wozu gemäß Fig. 1 eine drahtlose Datenkommunikation bzw. ein drahtloses Kommunikationsnetzwerk 5 genutzt werden kann.

Im Betrieb kann eine kontinuierliche Anpassung der Phoneme erfolgen, um z.B. etwaigen Änderungen in der Zeit/Frequenz-Charakteristik der Aussprache des betreffenden Benutzers bzw. Fahrers Rechnung zu tragen. Insbesondere kann auch eine automatische Anpassung des Benutzersprachprofils erfolgen, wenn sich zu starke Veränderungen bzw. Abweichungen zwischen den gespeicherten Sprachmustern und den aktuellen Sprachmustern des jeweiligen Benutzers (z.B. infolge von Stress, Müdigkeit oder Krankheit) ergeben oder wenn eine zunehmend eingeschränkte Separierung aufeinanderfolgender Phoneme und/oder eine geringere Erkennungsrate etwa infolge einer Krankheit oder Übermüdung des Benutzers bzw. Fahrers festgestellt wird.

In Ausführungsformen der Erfindung kann auf Basis der jeweiligen Abweichungen zwischen den abgespeicherten Sprachmustern und den aktuellen Sprachmustern des betreffenden Benutzers auch auf den Zustand des Benutzers bzw. Fahrers geschlossen werden, wobei auch entsprechende Warnungen (z.B. hinsichtlich einer Übermüdung des Fahrers) generiert oder unterstützt werden können.

In weiteren Ausführungsformen der Erfindung kann auch ein bestimmter Satz von Phonemen basierend auf dem zuvor ermittelten Fahrerzustand (z.B. "krank", "gestresst", "übermüdet", "normal" etc.) automatisch und "intelligent" ausgewählt werden, wobei in diesem Falle eine vorherige Erfassung des Fahrerzustandes (z.B. auf Basis einer spektralen und/oder cepstralen Analyse) erfolgen kann.

## Patentansprüche

1. Vorrichtung zur Spracherkennung, insbesondere in einem Fahrzeug, mit einer Verarbeitungseinheit zur Verarbeitung von Audiosignalen eines Benutzers auf Basis eines diesem Benutzer zugeordneten Benutzersprachprofils,
**dadurch gekennzeichnet, dass**
die Vorrichtung dazu konfiguriert ist, folgende Schritte durchzuführen:
Speichern des Benutzersprachprofils in einem nur diesem Benutzer zugeordneten, außerhalb der Verarbeitungseinheit befindlichen externen Speicher; und
Automatisches Abrufen des in diesem externen Speicher gespeicherten Benutzersprachprofils bei jedem Neustart der Vorrichtung, wobei das automatisch abgerufene Benutzersprachprofil an die Verarbeitungseinheit zur Verwendung bei der Verarbeitung künftiger Audiosignale des Benutzers übermittelt wird.

2. Vorrichtung nach Anspruch 1,
**dadurch gekennzeichnet, dass**
der dem Benutzer zugeordnete Speicher in einer mobilen und tragbaren Speichervorrichtung, insbesondere einem Fahrzeugschlüssel (2), Schlüsselanhänger, Speicherarmband (3) oder dergleichen, angeordnet ist.

3. Vorrichtung nach Anspruch 1 oder 2,
**dadurch gekennzeichnet, dass**
der dem Benutzer zugeordnete Speicher ein Speicherbereich in einem Cloud-Speicher (4) ist.

4. Vorrichtung nach einem der Ansprüche 1 bis 3,
**dadurch gekennzeichnet, dass**
diese ferner dazu konfiguriert ist, das Speichern bzw. Abrufen des Benutzersprachprofils über eine drahtlose Datenübertragung vorzunehmen.

5. Vorrichtung nach einem der vorhergehenden Ansprüche,
**dadurch gekennzeichnet, dass**
diese ferner dazu konfiguriert ist, das Speichern bzw. Abrufen des Benutzersprachprofils verschlüsselt vorzunehmen.

6. Vorrichtung nach einem der vorhergehenden Ansprüche,
**dadurch gekennzeichnet, dass**
diese ferner dazu konfiguriert ist, eine automatische Anpassung des Benutzersprachprofils an ein aktuelles Sprachmuster des Benutzers vorzunehmen.

7. Vorrichtung nach einem der vorhergehenden Ansprüche,
**dadurch gekennzeichnet, dass**
diese ferner dazu konfiguriert ist, das an die Verarbeitungseinheit zur Verwendung bei der Verarbeitung künftiger Audiosignale des Benutzers übermittelte Benutzersprachprofil in Abhängigkeit von einem erfassten aktuellen Zustand des Benutzers anzupassen.

8. Vorrichtung nach einem der vorhergehenden Ansprüche,
**dadurch gekennzeichnet, dass**
diese ferner dazu konfiguriert ist, das an die Verarbeitungseinheit zur Verwendung bei der Verarbeitung künftiger Audiosignale des Benutzers übermittelte Benutzersprachprofil anzupassen, wenn bei der Verarbeitung von Audiosignalen des Benutzers eine verminderte Separierbarkeit aufeinanderfolgender Phoneme und/oder eine Abnahme der Erkennungsrate von Phonemen festgestellt wird.

9. Vorrichtung nach einem der vorhergehenden Ansprüche,
**dadurch gekennzeichnet, dass**
diese ferner dazu konfiguriert ist, auf Basis einer Abweichung zwischen dem im externen Speicher gespeicherten Benutzersprachprofil und einem aktuellen Sprachmuster des Benutzers die Erzeugung eines Warnsignals zu veranlassen.

10. Verfahren zur Spracherkennung, insbesondere in einem Fahrzeug, mit einer Verarbeitungseinheit zur Verarbeitung von Audiosignalen eines Benutzers auf Basis eines diesem Benutzer zugeordneten Benutzersprachprofils, **dadurch gekennzeichnet, dass**
das Verfahren folgende Schritte aufweist:
Speichern des Benutzersprachprofils in einem nur diesem Benutzer zugeordneten, außerhalb der Verarbeitungseinheit befindlichen externen Speicher; und
Automatisches Abrufen des in diesem externen Speicher gespeicherten Benutzersprachprofils bei jedem Neustart der Vorrichtung, wobei das automatisch abgerufene Benutzersprachprofil an die Verarbeitungseinheit zur Verwendung bei der Verarbeitung künftiger Audiosignale des Benutzers übermittelt wird.
